# EUROPEAN PATENT APPLICATION

(11) **EP 4 465 182 A1**
(43) Date of publication of application: **20.11.2024**
(21) Application number: 23206287.7
(22) Date of filing: 27.10.2023
(51) Int. Cl.: G06F 11/30, G06F 11/36

(54) **SENSOR-BASED CONTROL FOR DEBUG INVASIVENESS**

(30) Priority: 15.05.2023 US 202318197255
(71) Applicant: INTEL Corporation, Santa Clara, CA 95054 (US)
(72) Inventor: Kandula, Rakesh, 560035 Bangalore, Karnataka (IN); Kuehnis, Rolf, Portland OR, 97229 (US); Menon, Sankaran, Austin TX, 78738 (US)
(74) Representative: Samson & Partner Patentanwälte mbB

(57) **Abstract**

An example of an apparatus may include circuitry to monitor one or more sensors, determine a debug condition based on the monitored one or more sensors, and provide an indication of the debug condition. In some examples, the apparatus includes further circuitry to adjust a debug operation based at least in part on the provided indication of the debug condition. Other examples are disclosed and claimed.

## Description

### BACKGROUND

The Mobile Industry Processor Interface (MIPI) Alliance publishes various specifications (mipi.org). MIPI Debug for I3C (v1.0.1, released in June 2022) is a specification for a bare-metal, low pin count interface for transporting debug controls and data between a debug and test system (DTS) and a target system (TS). The specification handles the network topology in a dynamic fashion, making the specification well suited as a flexible and scalable debug and test specification for systems that enable mobile, the Internet of Things (IoT), automotive and other use cases. The specification is suitable for application processors, power management integrated circuits, modems and other power-managed components. The interface delivers multicomponent connectivity across either dedicated debug or shared bus topologies, requires only two wires, supports multiple entry points, and maintains a network even as components power down and off a network and then rejoin after powering back up.

There is an ongoing need for improved computational devices to enable ever increasing demand for modeling complex systems, providing reduced computation times, and other considerations. In particular, there is an ongoing desire to improve debug circuits that are included in or otherwise support operation of integrated circuits. It is with respect to these and other considerations that the present improvements have been needed. Such improvements may become critical as the desire to improve computational efficiency becomes even more widespread.

### BRIEF DESCRIPTION OF DRAWINGS

Various examples in accordance with the present disclosure will be described with reference to the drawings, in which:
FIG. 1A is a block diagram of an example of an integrated circuit in one implementation.
FIG. 1B is a block diagram of an example of an apparatus in one implementation.
FIG. 1C is a block diagram of another example of an apparatus in one implementation.
FIG. 2 is a block diagram of an example of a system for sensor-based control of debug invasiveness in one implementation.
FIG. 3 is a block diagram of another example of a system for sensor-based control of debug invasiveness in one implementation.
FIG. 4 is a block diagram of an example of a trace controller for sensor-based control of debug invasiveness in one implementation.
FIG. 5 is a block diagram of another example of a system for sensor-based control of debug invasiveness in one implementation.
FIG. 6 is a block diagram of another example of a system for sensor-based control of debug invasiveness in one implementation.
FIG. 7 is a block diagram of another example of a system for sensor-based control of debug invasiveness in one implementation.
FIG. 8 is a block diagram of another example of a system for sensor-based control of debug invasiveness in one implementation.
FIG. 9 is a block diagram of another example of a system for sensor-based control of debug invasiveness in one implementation.
FIG. 10 illustrates an example of another computing system.
FIG. 11 illustrates a block diagram of an example processor and/or System on a Chip (SOC) that may have one or more cores and an integrated memory controller.
FIG. 12A is a block diagram illustrating both an example in-order pipeline and an example register renaming, out-of-order issue/execution pipeline according to examples.
FIG. 12B is a block diagram illustrating both an example in-order architecture core and an example register renaming, out-of-order issue/execution architecture core to be included in a processor according to examples.
FIG. 13 illustrates examples of execution unit(s) circuitry.
FIG. 14 is a block diagram of a register architecture according to some examples.
FIG. 15 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for sensor-based control for debug invasiveness. According to some examples, the technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including integrated circuitry which is operable to control debug invasiveness based on sensor information.

In the following description, numerous details are discussed to provide a more thorough explanation of the examples of the present disclosure. It will be apparent to one skilled in the art, however, that examples of the present disclosure may be practiced without these specific details. In other instances, well-known structures and devices are shown in block diagram form, rather than in detail, in order to avoid obscuring examples of the present disclosure.

Note that in the corresponding drawings of the examples, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary examples to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the examples of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of' or "one or more of" can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

As used herein, a debug and test system (DTS), sometimes also referred to as a debug tool, generally includes a debug probe and a host platform (e.g., a host personal computer (PC)). Examples of a DTS include LAUTERBAUCH debuggers, ASSET INTERTECH debuggers, CORELIS debuggers, etc. The device or system being tested/debugged may be referred to as the target system (TS), device under test (DUT), or system under test (SUT). A trace controller (TC), a system-on-a-chip (SOC) trace controller (STC), and/or a trace merge unit (TMU) may refer to an aggregator of the trace debug data from various sources (e.g., as used herein a TC includes implementation as a STC, a TMU, etc.). A TMU is typically implemented in hardware. Examples of a TMU include an ARM Trace Funnel, an ARM System Trace Macrocell (STM), an INTEL NPK, etc. In some systems, protocols used to merge traces include Mobile Industry Processor Interface (MIPI)/ ARM Trace Wrapper Protocol (TWP) or MIPI System Trace Protocol (STP).

Sources of trace debug data include real-time instruction trace (RTIT), INTEL processor trace (INTEL PT), application software, an operating system (OS), a basic input/output system (BIOS), etc. Examples of a TC include ARM CoreSight, Intel's NorthPeak (NPK), etc. The TC may include embedded trace buffers (ETBs, sometimes also referred to as trace aggregator buffers) for each debug source (e.g., ETB1 assigned to RTIT source, ETB2 mapped to hardware signal sources, etc.). The ETBs collect the data from each source upon the specific trigger based on debug scenarios.

In some compute platforms and SOCs, a debug infrastructure may include a DTS and a TC. The DTS receives the debug traces from the TC. The TC may aggregate the traces from the various blocks/components within the system and send the aggregated traces to an arbiter. The arbiter selects the traces from each of the sources, converts the trace debug data to MIPI STP format, and stores the trace debug data in destination buffers. The DTS then downloads the debug trace data from the TC for debugging issues in the system.

A problem is that abnormal operation conditions may introduce an artifact defect in the trace debug data (e.g., as opposed to an infield defect that corresponds to a true defect occurring in the field following manufacturing). For example, a voltage droop condition and/or an over-temperature condition may introduce artifact defects in the trace debug data, particularly when the debug invasiveness is high. For complex systems, such as multi-core processors, the amount of debug data continuously drawn may result in giga-bytes (GBs) of debug data. When generating such large amounts of debug data, the presence of an abnormal operation condition may increase the likelihood of the introduction of an artifact defect. A problem is that the incorrect identification of an artifact defect as an infield defect may result in an incorrect identification of a root cause of the debug. Some examples described herein overcome one or more of the foregoing problems.

Some examples provide technology for sensor-based control for debug invasiveness. Some examples may provide debug/trace/test technology that takes into account various sensor readings to control an amount of debug invasiveness and/or to reduce a likelihood of an introduction of artifact defects. Some examples may provide a DTS, a TC, etc. that is configured to monitor various parameters of the silicon such as voltage droop, temperature, etc., and to make a deterministic decision with respect to when to continue the trace and/or when to potentially pause the trace based on the monitored parameters of the silicon.

Some examples may integrate a sensor fusion block (SFB) based on sensor inputs to control the trace sources, to control the TC, and/or to control the traces going into the DTS. As used herein, a sensor fusion may refer to any blending, amalgamation, joining, merging, melding, mingling, co-mingling, integration, intermixture, intermingling, or other combination of sensor information. An example SFB may collect one or more silicon parameters (e.g., temperature, voltage droop, etc.) and send the collected data as part of silicon status message(s) to a debug tool (e.g., a DTS). Additionally, or alternatively, in some examples the SFB may generate triggers (e.g., trigger events, sensor interrupts, etc.) that may either be sent as an STP message to a DTS or that may be utilized by the system directly to control the system trace infrastructure (e.g., depending on configuration, implementation, etc.). In some examples, the TC may aggregate the trace debug data from various sources (e.g., RTIT, INTEL PT, application software, OS, BIOS, etc.) and may further be configured to control an output bandwidth of the TC based on information and/or interrupt triggers from the SFB (e.g., that indicates an abnormal temperature rise, voltage droop, etc.). Advantageously, some examples may detect artifact defects and/or may detect a condition when artifact defects are more likely to be introduced. Another advantage is that some examples may be configured to adjust an amount of debug invasiveness based on the sensor reading to reduce a likelihood that artifact defects are introduced.

In some examples, the DTS may be configured to control the trace bandwidth by using suitable debug logic and/or circuitry to control the TC, and/or to control the trace sources directly. For example, a suitably configured DTS may utilize data provided by a SFB to predict issues based on sensor fusion data (e.g., algorithmically) and/or to utilize trigger events from the SFB. Depending on the implementation, the trace bandwidth can be controlled by the SFB automatically, either by communicating to the TC or by communicating directly with the trace sources. Any suitable trace bandwidth control techniques may be utilized to deterministically start, pause, and resume the debug traces.

In some examples, the TC and the DTS may follow an industry-standard protocol, such as MIPI STPv2, for tracing the debug data with standard packets compliant with the applicable standard. In some examples, the TC architecture may be configured to monitor the sensor criticality and cause null packets (e.g., MIPI STP specified NULL packets) to be inserted into the trace export stream accordingly. Alternatively, or additionally, in some examples a TC packetizer may communicate with the DTS, based on sensor criticality, through protocol compliant interrupt messages. Alternatively, or additionally, in some examples the trace export clock may be stopped (e.g., per MIPI STPv1.0, MIPI Parallel Trace Interface (PTI) v2, etc.) to cause traces to be dropped. Alternatively, or additionally, in some examples a severity or verbosity level of the trace sources may be altered based on sensor criticality to reduce trace generation. Alternatively, or additionally, in some examples trace generation at the source may be completely stopped based on sensor criticality. Advantageously, some examples of deterministic sensor monitoring technology to control debug invasiveness may reduce or eliminate artifact defects and avoid costly replacement of otherwise non-defective devices due to such artifact defect issues.

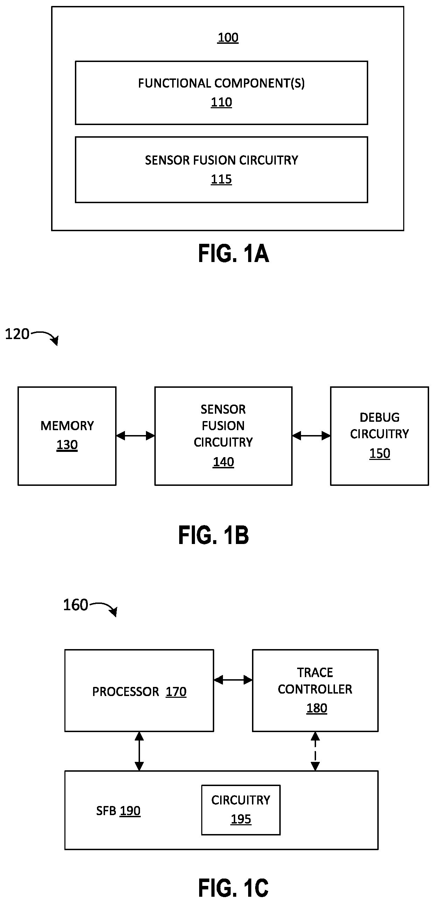

With reference to FIG. 1A, an example of an apparatus 100 (e.g., an integrated circuit (IC)), an electronic system, a SOC, etc.) may include one or more functional components 110 (e.g., a processor, a controller, a central processor unit (CPU), a graphics processor unit (GPU), etc.) and circuitry 115 (e.g., sensor fusion circuitry communicatively coupled to the component(s) 110) to monitor one or more sensors, determine a debug condition based on the monitored one or more sensors, and provide an indication of the debug condition. In some examples, the indication may be provided to one or more of a trace controller (e.g., a TC, a STC, a TMU, etc.) and a debug system (e.g., a DTS, a debug tool, etc.). For example, the one or more sensors may be to provide one or more of voltage information and temperature information, and the circuitry 115 may be configured to determine the debug condition based on one or more of the voltage information and temperature information. In some examples, the circuitry 115 may be further configured to compare information from the one or more sensors against respective threshold information.

In some examples, the circuitry 115 may be further configured to adjust a debug operation based at least in part on the provided indication of the debug condition. For example, the circuitry 115 may be configured to reduce a debug operation invasiveness if the indication of the debug condition corresponds to an abnormal operation condition. In some examples, the circuitry 115 may be further configured to adjust an output bandwidth of trace debug data based at least in part on the provided indication of the debug condition, to adjust a number of null packets inserted into a trace export stream based at least in part on the provided indication of the debug condition, to adjust a trace export clock based at least in part on the provided indication of the debug condition, and/or to adjust a trace verbosity level (e.g., or severity level) based at least in part on the provided indication of the debug condition.

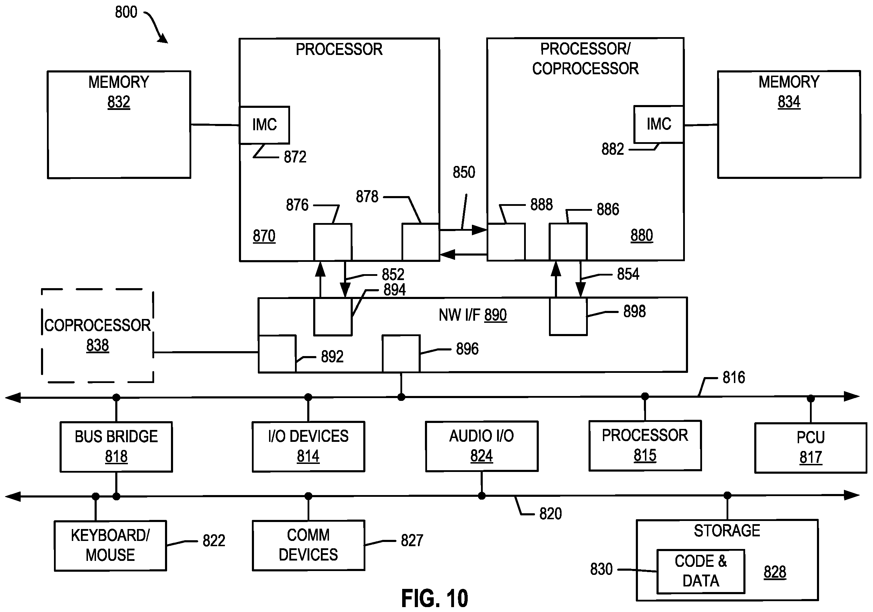

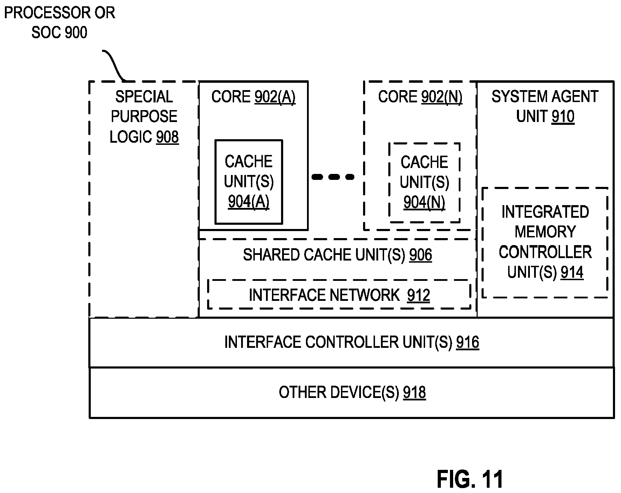

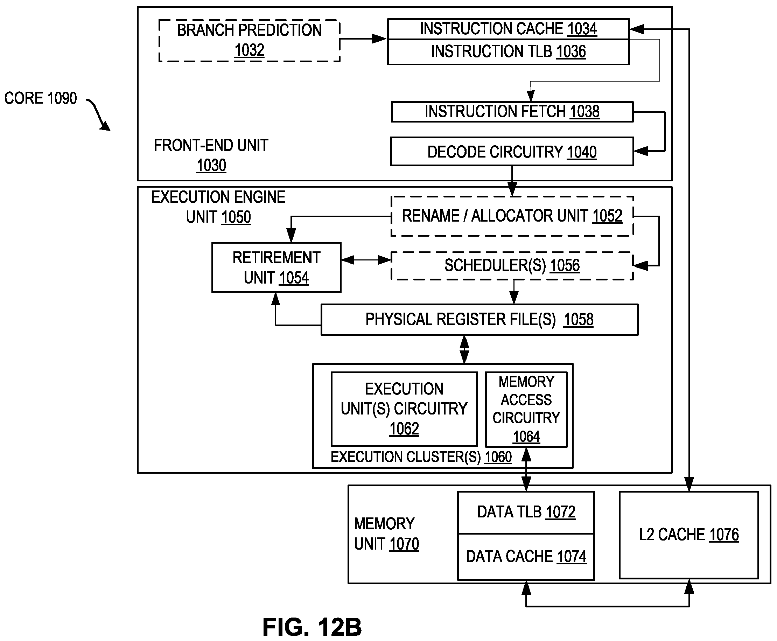

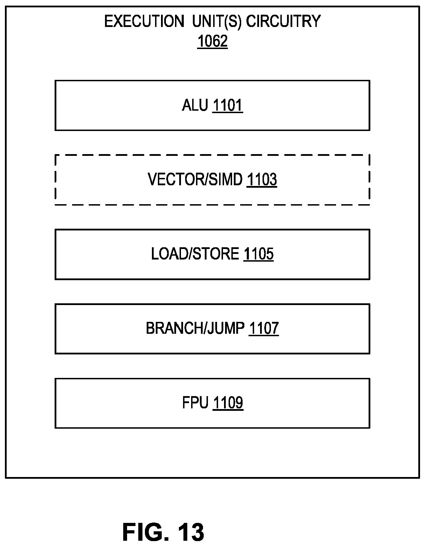

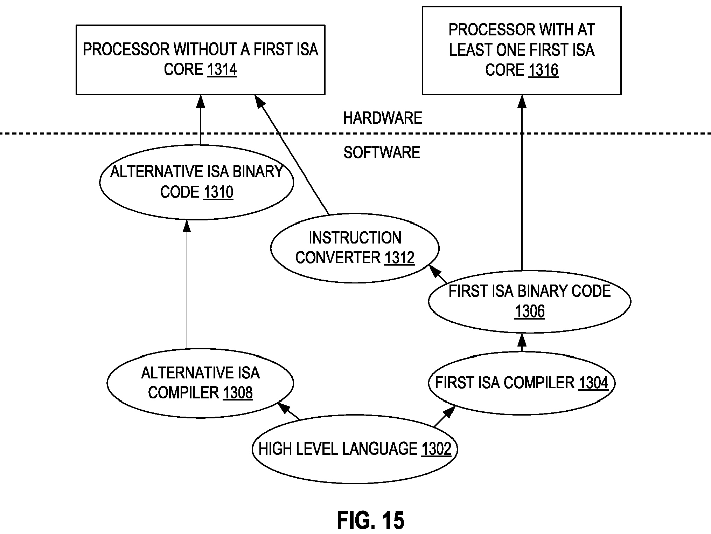

For example, the circuitry 115 may be integrated/incorporated with/in any of the processors described herein. In particular, the circuitry 115 may be integrated/incorporated with/in the processor 800, the processor 870, the processor 815, the coprocessor 838, and/or the processor/coprocessor 880 (FIG. 10), the processor 900 (FIG. 11), the core 1090 (FIG. 12B), the execution units 1062 (FIGS. 12B and 13), and the processor 1316 (FIG. 15). Some examples of the circuitry 115 may be integrated/incorporated with/in a parallel computing application, a GPU, a SIMD processor, and/or an AI processor.

With reference to FIG. 1B, an example of an apparatus 120 includes memory 130 to store debug risk threshold information, and sensor fusion circuitry 140 coupled to the memory 130 to compare sensor information against the stored debug risk threshold information, and provide an indication of the comparison. For example, the sensor fusion circuitry 140 may be configured to provide the indication of the comparison to one or more of a trace controller and a debug system. In some examples, the sensor fusion circuitry 140 may be further configured to trigger an interrupt if the comparison indicates an abnormal operation condition. In some examples, the sensor information may include one or more of voltage information and temperature information, and the sensor fusion circuitry 140 may be configured to provide the indication based on a comparison of one or more of the voltage information against a stored debug voltage risk threshold and the temperature information against a stored debug temperature risk threshold.

In some examples, the apparatus 120 may further comprise debug circuitry 150 coupled to the sensor fusion circuitry 140 to adjust a debug operation based at least in part on the provided indication of the comparison. For example, the debug circuitry 150 may be further configured to reduce a debug operation invasiveness if the indication of the comparison corresponds to an abnormal operation condition. In some example, the debug circuitry 150 may be further configured to adjust an output bandwidth of trace debug data based at least in part on the provided indication of the comparison, to adjust a number of null packets inserted into a trace export stream based at least in part on the provided indication of the comparison, to adjust a trace export clock based at least in part on the provided indication of the comparison, and/or to adjust a trace verbosity level based at least in part on the provided indication of the comparison.

For example, the apparatus 120 may be integrated/incorporated with/in any of the processors described herein. In particular, any/all of the memory 130 and circuitry 140, 150 may be integrated/incorporated with/in the processor 800, the processor 870, the processor 815, the coprocessor 838, and/or the processor/coprocessor 880 (FIG. 10), the processor 900 (FIG. 11), the core 1090 (FIG. 12B), the execution units 1062 (FIGS. 12B and 13), and the processor 1316 (FIG. 15). Some examples of any/all of the circuitry 210, 220, 230 may be integrated/incorporated with/in a parallel computing application, a GPU, a SIMD processor, and/or an AI processor.

With reference to FIG. 1C, an example of an apparatus 160 includes a processor 170, a trace controller 180 coupled to the processor 170 to aggregate trace debug data, and a sensor fusion block 190 coupled to the processor to collect operation parameters (e.g., an optionally coupled to the trace controller 180), the sensor fusion block 190 comprising circuitry 195 to store debug risk threshold information, compare collected operation parameters against the stored debug risk threshold information, and provide an indication of the comparison. For example, the circuitry 195 may be configured to provide the indication of the comparison to one or more of the trace controller 180 and a debug system (not shown). In some examples, the circuitry 195 may be further configured to trigger an interrupt if the comparison indicates an abnormal operation condition. In some examples, the collected operation parameters may include one or more of voltage information and temperature information, and the circuitry 195 may be further configured to provide the indication based on a comparison of one or more of the voltage information against a stored debug voltage risk threshold and the temperature information against a stored debug temperature risk threshold.

In some examples, the trace controller 180 (e.g., or the debug system) may be further configured to adjust a debug operation based at least in part on the provided indication of the comparison. For example, the trace controller 180 may be configured to reduce a debug operation invasiveness if the indication of the comparison corresponds to an abnormal operation condition. In some examples, the trace controller 180 may be further configured to adjust an output bandwidth of trace debug data based at least in part on the provided indication of the comparison, to adjust a number of null packets inserted into a trace export stream based at least in part on the provided indication of the comparison, to adjust a trace export clock based at least in part on the provided indication of the comparison, and/or to adjust a trace verbosity level based at least in part on the provided indication of the comparison.

For example, the processor 170 may be implemented as any of the processors described herein. In particular, the processor 170 may be implemented as the processor 800, the processor 870, the processor 815, the coprocessor 838, and/or the processor/coprocessor 880 (FIG. 10), the processor 900 (FIG. 11), the core 1090 (FIG. 12B), the execution units 1062 (FIGS. 12B and 13), and the processor 1316 (FIG. 15). Some examples of the processor 310 may be implemented as a GPU, a SIMD processor, an AI processor, and/or as part of a parallel computing application.

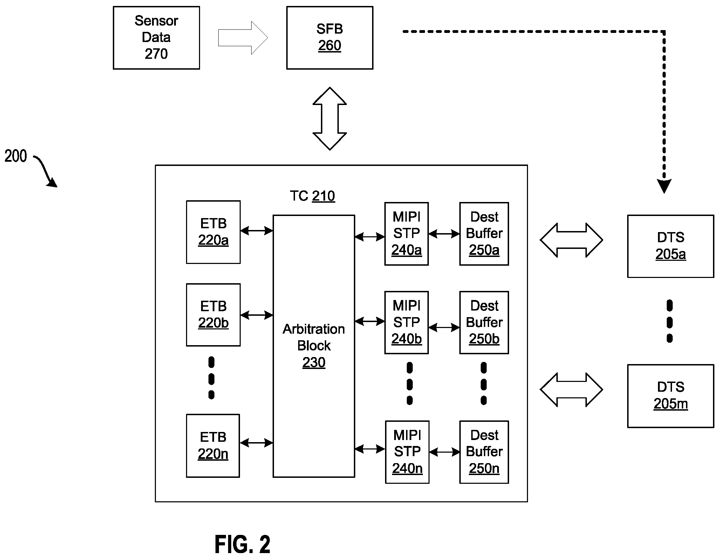

FIG. 2 shows an example system 200 where one or more debug tools 205a through 205m (e.g., DTS's, etc.; collectively debug tools 205) receive debug traces from a TC 210. The TC 210 includes one or more ETBs 220a through 220n (collectively ETBs 220), an arbitration block 230, one or more MIPI STP blocks 240a through 240n (collectively, MIPI STP blocks 240), and one or more destination buffers 250a through 250n (collectively, destination buffers 250), coupled as shown (e.g., the number of debug tools, ETBs, MIPI STP blocks, and/or destination buffers is not necessarily the same). The ETBs 220 aggregate traces from various IPs/blocks/circuits within the SOC/TS/DUT/SUT. The arbitration block 230 select traces from each of the ETBs 220. The MIPI STP blocks 240 converts the selected trace data to MIPI STP format and the converted trace data is stored in the destination buffers 250. In some examples, a single MIPI STP block may address different ETBs. In some implementations, multiple MIPI STP blocks may be utilized for multiple destinations, while other implementations, a single MIPI STP block may be utilized for a single destination. The respective debug tools 205 download the debug traces from the TC 210 for debugging the issues in the SOC/TS/DUT/SUT.

In accordance with some examples, the system 200 further includes technology for sensor-based control for debug invasiveness. As shown in FIG. 2, the system 200 includes a sensor fusion block (SFB) 260 (e.g., sensor fusion circuitry) that may be configured to read and process sensor data 270. For example, the debug tools 205, the TC 210, and/or the SFB 260 may consider various sensor readings to control an amount of debug invasiveness and/or to reduce a likelihood of an introduction of artifact defects. In some examples, the SFB 260 may be configured to monitor various parameters of the silicon such as voltage droop, temperature, etc., and the debug tools 205, TC 210, and/or the SFB 260 may make suitable deterministic decisions with respect to when to continue the trace and/or when to potentially pause the trace based on the monitored parameters of the silicon. Any suitable debug trace control techniques may be utilized to deterministically start, pause, and resume the debug traces.

In some examples, the SFB 260 may send collected sensor data as part of silicon status message(s) to the debug tools 205 (e.g., directly or through the TC 210). In some examples, the debug tools 205 may control the trace bandwidth by using suitable debug logic and/or circuitry to control the TC 210, and/or to control the trace sources directly. For example, a suitably configured debug tool 205 may utilize data provided by the SFB 260 to predict issues based on the data from the SFB 260 (e.g., algorithmically). Additionally, or alternatively, in some examples the SFB 260 may generate triggers (e.g., trigger events, sensor interrupts, etc.) that may either be sent as an STP message to the debug tools 205 to control the system trace infrastructure. For example, the debug tools may adjust a severity or verbosity level of the trace sources to increase or reduce trace generation based on a sensor criticality indicated from the data from the SFB 260.

In some examples, additionally or alternatively, the trace bandwidth can be controlled by the SFB 260 automatically, either by communicating to the TC 210 or by communicating directly with the trace sources. For example, the TC 210 may adjust an output bandwidth of messages from the destination buffers 250 based on interrupt triggers from the SFB 260 (e.g., where such interrupt triggers may indicate an abnormal temperature rise, voltage droop, etc.). In another example, the TC 210 may be configured to monitor the sensor criticality (e.g., based on data/messages received from the SFB 260) and insert null packets into the appropriate destination buffers 250. Alternatively, or additionally, in some examples trace generation at the source may be completely stopped based on sensor criticality. Advantageously, some examples may detect artifact defects and/or may detect a condition when artifact defects are more likely to be introduced. Another advantage is that some examples may be configured to adjust an amount of debug invasiveness based on the sensor reading(s) to reduce a likelihood that artifact defects are introduced.

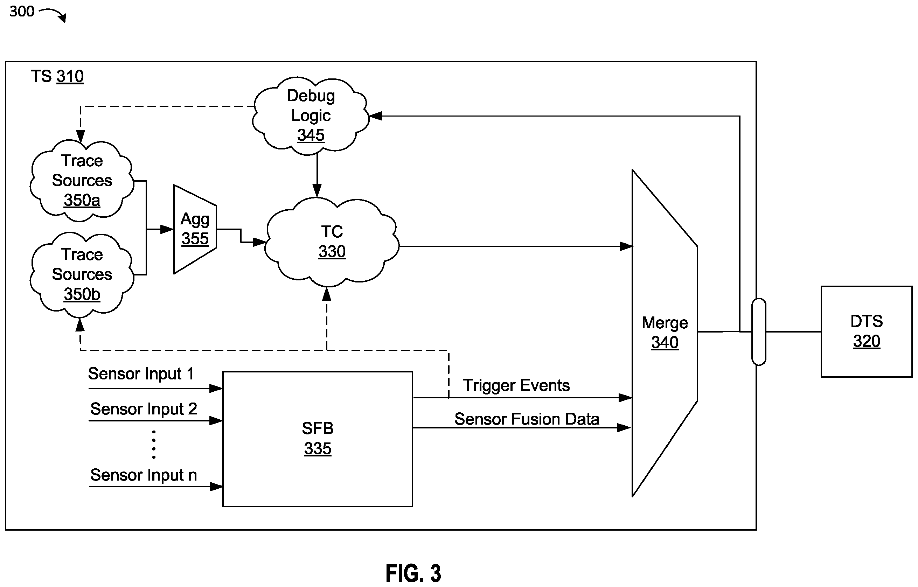

FIG. 3 shows an example of a system 300 that includes a TS 310 and a DTS 320. The TS 310 include a TC 330, a SFB 335, a merge block 340, debug logic 345, trace sources 350a and 350b (collectively, trace sources 350, and an aggregator 355, coupled as shown. The SFB 335 receives multiple sensor inputs and provides sensor fusion data and trigger events to the merge block 340. In some implementations, the SFB 335 may optionally also send trigger events to the TC 330 and/or the trace sources 350. In some implementations, the debug logic 345 may also optionally control one or more of the trace sources 350. In the example system 300, the integrated SFB 335 may be configured to control the trace sources 350 and/or the TC 330 to control traces going into the DTS 320, based on sensor inputs. In particular, the TC 330, the SFB 335, the merge block 340, and/or the debug logic 345 may be configured to incorporate one or more of the features or aspects of any of the examples described herein.

In some examples, a TC that includes a trace merge unit is configured to convert raw signal level traces into a packetized trace format to be transported over a shared trace fabric. The conversion may sometimes be referred to as data packetization. In some examples, the packetization may be performed by monitoring incoming trace values, creating packets containing new data values along with source clock timing information, and sending the packet output to trace fabric or to local storage. In some implementations, packetization may be performed by using separate packetizer blocks that connect to one or more raw signal lanes and that share a common internal trace fabric. The TC may also include a register controller that configures how the raw signals are processed. The TC may also include a debug interface that supports an industry-standard protocol such as a MIPI STP trace protocol for the DTS to receive the debug traces.

Within the TC, each packetizer block may create a packet stream that can store one, two, four, or eight bytes at a time based on run-time programmable configuration. Each packetizer block may create packets from a subset of the supported trace fabric packet type encodings (e.g., the encodings may be specified in an industry standard format such as MIPI STPv2 protocol and may be compatible with a variety of software tools).

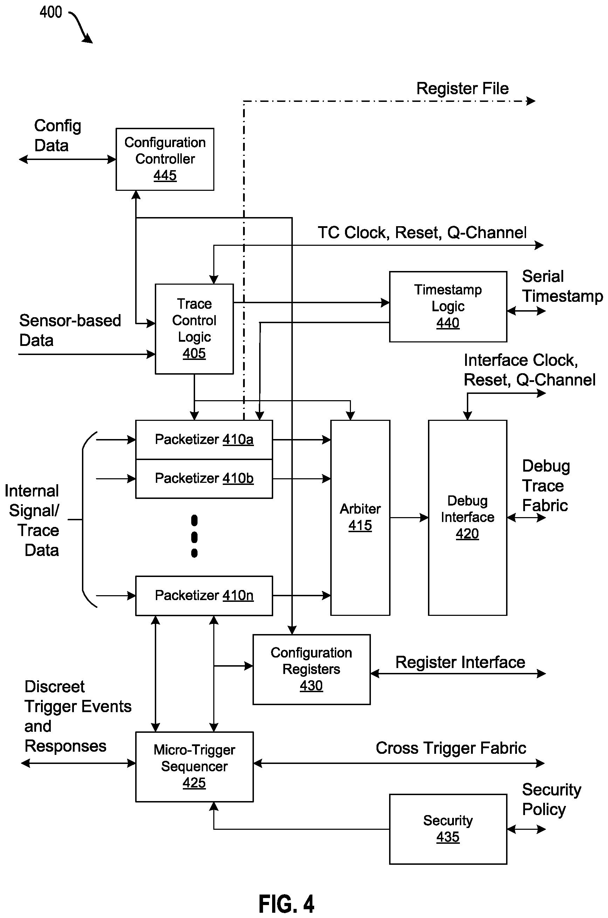

FIG. 4 shows and example of a trace controller 400 that includes technology for sensor-based control to adjust for debug invasiveness. The trace controller 400 includes trace control logic 405, packetizers 410a through 410n (collectively, packetizers 410), arbiter 415, debug interface 420, micro-trigger sequencer 425, configuration registers 430, security block 435, timestamp logic 440, and configuration controller 445, coupled as shown. The trace control logic 405 provides an input for sensor-based data (e.g., from one or more sensors, from sensor fusion circuitry, from a SFB, etc.). The trace control logic 405 may be configured to adjust the debug invasiveness based on the sensor data. Advantageously, a suitably configured trace controller 400 may reduce or eliminate artifact defects due to abnormal operating conditions indicated by the sensor data. In the example trace controller 400, the trace control logic 405, and/or other components of the trace controller 400, may be configured to incorporate one or more of the features or aspects of any of the examples described herein. The debug interface 420 output that is available as the debug trace fabric output is the modulated output based on the sensor data that adjusts for the debug invasiveness.

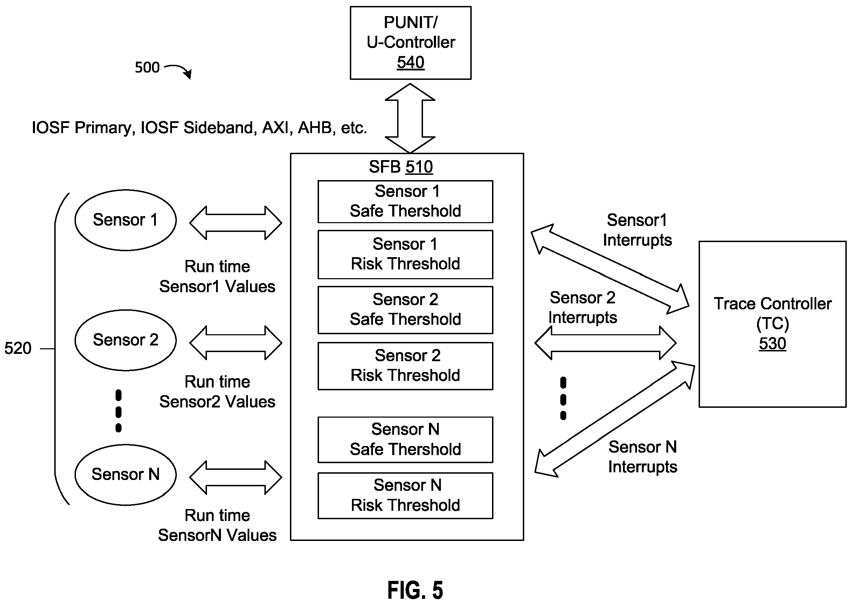

FIG. 5 shows an example system 500 that includes a SFB 510, N sensors 520 (e.g., where N>1), a TC 530, and a PUNIT/microcontroller 540, communicatively coupled as shown. The SFB 510 may store or otherwise have access to various thresholds associated with each of the sensors. As shown in FIG. 5, triggers that are generated within the SFB, based on threshold registers defined per sensor. For example, "safe" threshold and "risk" threshold registers may be defined for one or more temperature sensors. Similarly, safe threshold and risk threshold registers may be defined for one or more voltage sensors. Other safe and risk threshold registers may be defined for other sensors. These registers can be programmed by the OS, BIOS, firmware (FW) through any suitable fabric such as, for example, Intel On-chip Scalable Fabric (IOSF) primary, IOSF Sideband, Open Core Protocol (OCP), Advanced Microcontroller Bus Architecture (AMBA), Advanced Extensible interface (AXI), Advanced High-performance fabric (AHB), Advance Peripheral Bus (APB), etc. Any suitable technology may be utilized to implement appropriate registers including, for example, memory mapped registers, private space registers (e.g., registers that are not part of system memory address space), etc.

In some examples, run time sensor values from the sensors 520 are compared against the various safe and risk threshold values and suitable interrupts and data are provided to the TC 530 and/or the PUNIT/microcontroller 540 to adjust the debug invasiveness based on the sensor data. For example, if a temperature sensor value exceeds a corresponding risk temperature threshold, a sensor interrupt may provide a suitable indication to the TC 530 and the TC 530 may reduce the debug trace bandwidth in response to the interrupt. If the temperature sensor value later returns below the safe temperature threshold, a sensor interrupt may provide a suitable indication to the TC 530 and the TC 530 may increase the debug trace bandwidth in response to the interrupt. In another example, if a voltage sensor value is less than a corresponding risk voltage threshold, a sensor interrupt may provide a suitable indication to the TC 530 and the TC 530 may reduce the debug trace bandwidth in response to the interrupt. If the voltage sensor value later returns above the safe voltage threshold, a sensor interrupt may provide a suitable indication to the TC 530 and the TC 530 may increase the debug trace bandwidth in response to the interrupt. In another example, respective threshold registers may correspond to each verbosity and/or severity level and the system may adjust the debug invasiveness such that the verbosity and/or severity level is set based on where the sensor value falls within the respective thresholds. Table 1 below lists example threshold registers associated with respective verbosity levels:

**Table 1**

| Threshold Register Name | Verbosity Level | Verbosity Description |
|---|---|---|
| VoltageDroopThreshold3 | 3 | All messages (full verbosity) |
| VoltageDroopThreshold2 | 2 | Errors, warnings, and information only |
| VoltageDroopThreshold1 | 1 | Errors and warnings only |
| VoltageDroopThreshold0 | 0 | Errors only (minimum verbosity) |
| TemperatureThreshold3 | 3 | All messages (full verbosity) |
| TemperatureThreshold2 | 2 | Errors, warnings, and information only |
| Temperature Threshold1 | 1 | Errors and warnings only |
| TemperatureThreshold0 | 0 | Errors only (minimum verbosity) |

Other examples may utilize more, fewer, or different sensors and associated sensor thresholds.

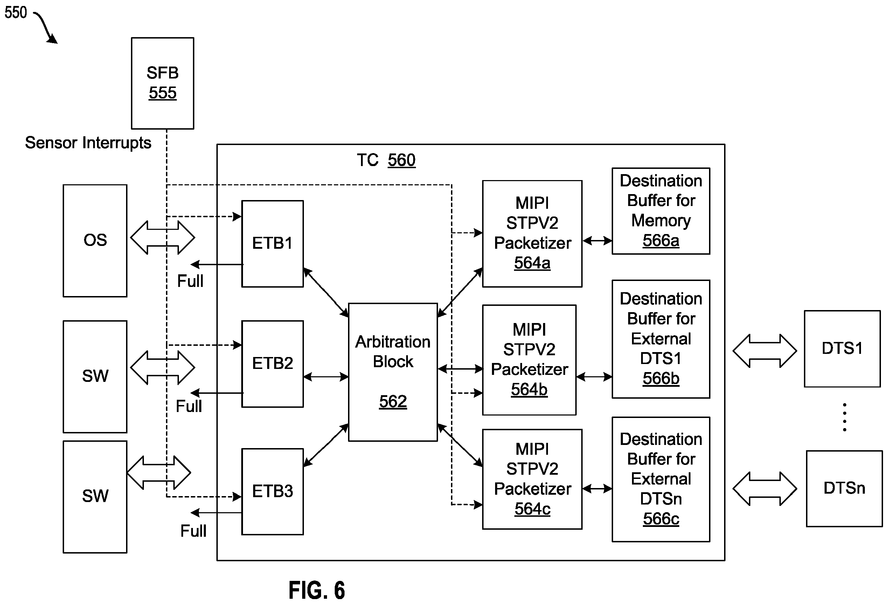

A wide variety of technical approaches may be utilized to beneficially control the debug invasiveness based on sensor data. FIG. 6 shows an example of a system 550 that utilizes a SFB 555 to monitor the sensor criticality and insert null packets accordingly. In the illustrated example, a TC 560 includes ETBs (ETB1, ETB2, and ETB3) to aggregate data from multiple sources (e.g., an OS, various software (SW) applications, BIOS, INTEL RTIT, etc.), an arbitration block 562, packetizers 564a, 564b, and 564c (collectively, packetizers 564), and corresponding destination buffers 566a, 566b, and 566c (collectively, destination buffers 566), coupled as shown. In the example system 550, the TC 560 takes sensor interrupts as inputs.

The destination buffer 566a may be connected to the system memory buffer. The system further includes DTS's DTS1 through DTSn communicatively coupled respectively to the destination buffers 566b and 566c (e.g., via a parallel trace port, etc.). Other destinations may include system memory, an embedded buffer, a universal serial bus (USB) debug class, MIPI PTI, etc. In this example, the TC 560 provides sensor interrupts to the ETBs and the packetizers 564. When the sensor interrupts are asserted, the ETBs are configured to show as "full" to the fabric through which traces are provided to the ETBs. When the ETBS show as full, the ETBs will not collect any more data. When the sensor interrupts are asserted (e.g., and/or when the ETBS are emptied), the arbitration block 562 provides "no-operation" (NOP) packets (e.g., or other suitable indications) to the packetizers 564 and the packetizers 564 will subsequently insert MIPI STP formatted NULL packets in the destination buffers 566. In some examples, the DTS may detect the potential for the presence of artifact defects in the debug data from the presence of the NULL packet(s).

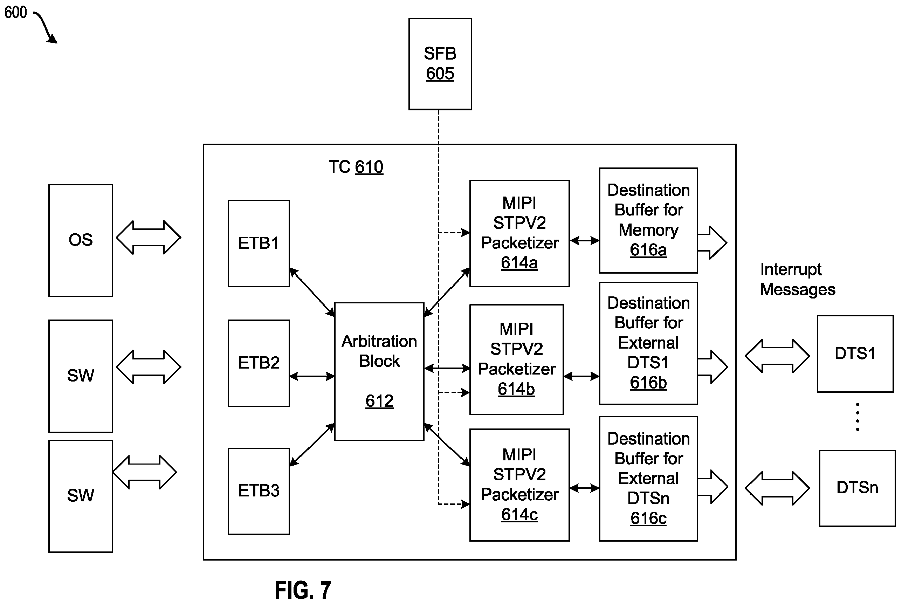

Another technical approach to beneficially control the debug invasiveness based on sensor data involves TC communication of the sensor criticality to the DTS through protocol compliant interrupt messages. FIG. 7 shows an example of a system 600 that utilizes such technology. The system 600 includes a SFB 605, an TC 610, a TS that includes trace data from a variety of sources (e.g., an OS, SW, etc.), and DTS's DTS1 through DTSn. The TC 610 may be similarly configured as the TC 560, including ETBs (ETB1, ETB2, and ETB3), arbitration block 612, packetizers 614 (614a, 614b, and 614c), and destination buffers 616 (616a, 616b, and 616c), coupled as shown.

In the system 600, the SFB 605 sends the interrupt messages as trace protocol messages (e.g., such as MIPI STP) directly to the DTS. When the DTS receives such interrupt messages, the DTS is configured to no longer request new debug trace data from the TS (e.g., or otherwise adjust the debug invasiveness based on what the received interrupt message indicates). In some examples, the DTS may detect the potential for the presence of artifact defects in the debug data from the receipt of an interrupt message from the TC 610 (e.g., initiated from the SFB 605) that indicates that debug should be paused (e.g., or that debug invasiveness should be reduced). In some example, the interrupt messages initiated by the SFB 605 may be delivered as part of the standard trace protocol bus.

Another technical approach to beneficially control the debug invasiveness based on sensor data involves stopping the trace clock either by the TS or the DTS, and therefore dropping potentially generated traces. As a result of stopping the clock of the trace aggregator, the input buffers will overflow and backpressure. The trace(s) will then be dropped at the trace source until the clock is restarted and the backlog is cleared. Accordingly, the potential for artifact defects is detected (e.g., by the SFB) and the debug invasiveness is reduced by stopping the trace clock. In some examples, the export clock of the trace streaming interface may be generated from within the TS, or the export clock of the trace streaming interface may be sourced from the external DTS. In either case, the trace export will stop and the system generates backpressure until the trace source will stop generating more trace data.

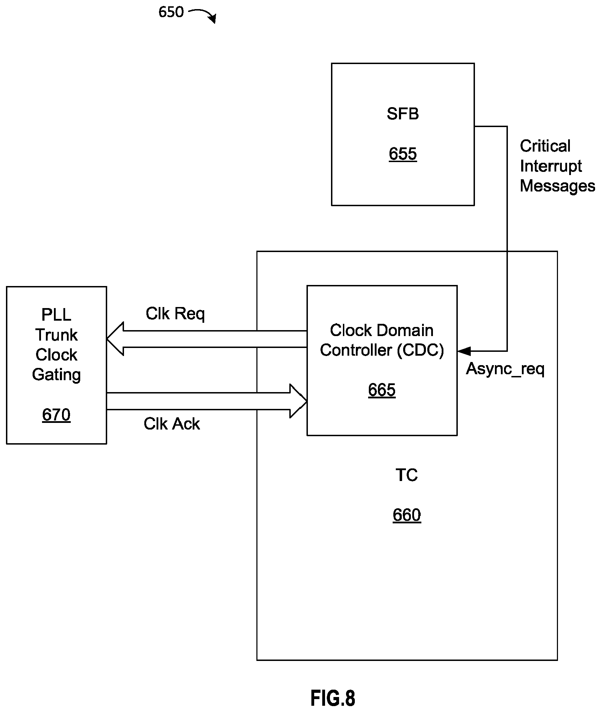

FIG. 8 shows an example of a system 650 that utilizes technology to stop the trace clock from TS to DTS based on sensor criticality reading to reduce the invasiveness. In the system 650, a SFB 655 detects an abnormal operation condition (e.g., based on sensor data), and provides a critical interrupt message to a TC 660. The TC 660 includes a clock domain controller (CDC) 665 that controls the TC clock. When the TC 660 requires the clock based on an asynchronous (async) request or synchronous (sync) requests, the clock request is asserted or de-asserted and accordingly the clock is provided to the TC 660 by a phase locked loop (PLL) trunk clock gating circuit 670 (e.g., which may be in the TS). Async requests may emanate from a different clock domain and sync request originates from a same TC clock domain. The critical interrupt messages from the SFB 655 are connected to an async request of the CDC 665. When critical interrupts are asserted the clock request from CDC 665 of the TC 660 is de-asserted (e.g. set to zero) and thereafter the trace clock will be gated.

In some examples, the export clock of the trace streaming interface may be sourced from the external DTS. An example of a system that utilizes technology to stop the trace clock from the DTS to the TS based on sensor interrupt messages sent to DTS may involve sending interrupt messages from the SFB to the DTS (e.g., similar to the system 600 from FIG. 7). When the DTS receives the sensor interrupt messages, the clock from the DTS may be stopped and thereafter the debug tracing may be halted. The TS is thereby protected from further debug invasiveness and introduction of artifact defects.

Another technical approach to beneficially control the debug invasiveness based on sensor data involves altering the verbosity level of the trace sources or completely stopping trace generation at the source. Various debug tools may provide technology to indicate a desired level of debug tracing or reporting, where the different levels may involve different amounts of debug invasiveness. Such software trace protocols typically include a verbosity field, a severity field, etc. that may be set, for example, in a configuration register to indicate the desired level of debug tracing or reporting. For example, MIPI SyS-T specifies eight severity levels from zero to seven. The verbosity and/or severity level may be utilized to filter traces at the source even before sending traces to the trace aggregator. Accordingly, by setting the verbosity and/or severity level of the trace sources, the amount of debug invasiveness may be adjusted. In some examples, an SFB may provide an indication of a run time operation condition to the DTS (e.g., via sensor interrupt messages, or other communication techniques) based on sensor data, and the DTS may adjust the verbosity and/or severity level in response to the indication from the SFB.

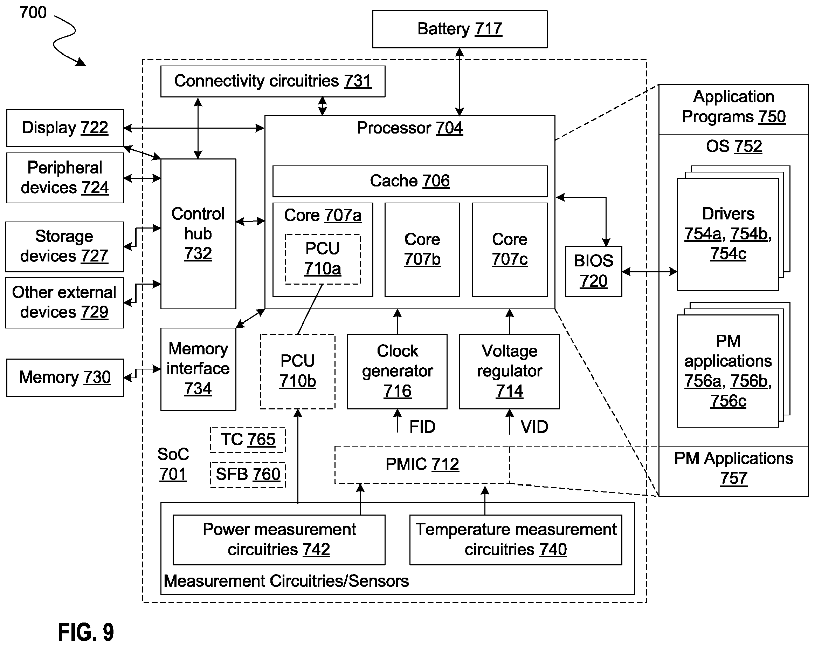

FIG. 9 illustrates a computer system or computing device 700 (also referred to as device 700), where technology in one or more circuit blocks of the device 700, in accordance with some examples, provides sensor-based control for debug invasiveness.

In some examples, device 700 represents an appropriate computing device, such as a computing tablet, a mobile phone or smart-phone, a laptop, a desktop, an Internet-of-Things (IOT) device, a server, a wearable device, a set-top box, a wireless-enabled e-reader, or the like. It will be understood that certain components are shown generally, and not all components of such a device are shown in device 700.

In an example, the device 700 comprises a SOC 701. An example boundary of the SOC 701 is illustrated using dotted lines in FIG. 9, with some example components being illustrated to be included within SOC 701. However, SOC 701 may include any appropriate components of device 700.

In some examples, device 700 includes processor 704. Processor 704 can include one or more physical devices, such as microprocessors, application processors, microcontrollers, programmable logic devices, processing cores, or other processing means. The processing operations performed by processor 704 include the execution of an operating platform or OS on which applications and/or device functions are executed. The processing operations include operations related to I/O (input/output) with a human user or with other devices, operations related to power management, operations related to connecting computing device 700 to another device, and/or the like. The processing operations may also include operations related to audio I/O and/or display I/O.

In some examples, processor 704 includes multiple processing cores 707a, 707b, 707c (also referred to individually or collectively as core(s) 707). Although merely three cores 707a, 707b, 707c are illustrated in FIG. 9, the processor 704 may include any other appropriate number of processing cores, e.g., tens, or even hundreds of processing cores. Processor cores 707a, 707b, 707c may be implemented on a single integrated circuit (IC) chip. Moreover, the chip may include one or more shared and/or private caches, buses or interconnections, graphics and/or memory controllers, or other components.

In some examples, processor 704 includes cache 706. In an example, sections of cache 706 may be dedicated to individual cores 707 (e.g., a first section of cache 706 dedicated to core 707a, a second section of cache 706 dedicated to core 707b, and so on). In an example, one or more sections of cache 706 may be shared among two or more of cores 707. Cache 706 may be split in different levels, e.g., level 1 (L1) cache, level 2 (L2) cache, level 3 (L3) cache, etc.

In some examples, a core 707 of the processor 704 may include a fetch unit to fetch instructions (including instructions with conditional branches) for execution by the core 707. The instructions may be fetched from any storage devices such as the memory 730. Core 707 may also include a decode unit to decode the fetched instruction. For example, the decode unit may decode the fetched instruction into a plurality of micro-operations. Core 707 may include a schedule unit to perform various operations associated with storing decoded instructions. For example, the schedule unit may hold data from the decode unit until the instructions are ready for dispatch, e.g., until all source values of a decoded instruction become available. In one example, the schedule unit may schedule and/or issue (or dispatch) decoded instructions to an execution unit for execution.

The execution unit may execute the dispatched instructions after they are decoded (e.g., by the decode unit) and dispatched (e.g., by the schedule unit). In an example, the execution unit may include more than one execution unit (such as an imaging computational unit, a graphics computational unit, a general-purpose computational unit, etc.). The execution unit may also perform various arithmetic operations such as addition, subtraction, multiplication, and/or division, and may include one or more an arithmetic logic units (ALUs). In an example, a co-processor (not shown) may perform various arithmetic operations in conjunction with the execution unit.

Further, execution unit may execute instructions out-of-order. Hence, core 707 may be an out-of-order processor core in one example. Core 707 may also include a retirement unit. The retirement unit may retire executed instructions after they are committed. In an example, retirement of the executed instructions may result in processor state being committed from the execution of the instructions, physical registers used by the instructions being de-allocated, etc. The processor 704 may also include a bus unit to enable communication between components of the processor 704 and other components via one or more buses. Processor 704 may also include one or more registers to store data accessed by various components of the cores 707 (such as values related to assigned app priorities and/or sub-system states (modes) association.

In some examples, device 700 comprises connectivity circuitries 731. For example, connectivity circuitries 731 includes hardware devices (e.g., wireless and/or wired connectors and communication hardware) and/or software components (e.g., drivers, protocol stacks), e.g., to enable device 700 to communicate with external devices. Device 700 may be separate from the external devices, such as other computing devices, wireless access points or base stations, etc.

In an example, connectivity circuitries 731 may include multiple different types of connectivity. To generalize, the connectivity circuitries 731 may include cellular connectivity circuitries, wireless connectivity circuitries, etc. Cellular connectivity circuitries of connectivity circuitries 731 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, 3rd Generation Partnership Project (3GPP) Universal Mobile Telecommunications Systems (UMTS) system or variations or derivatives, 3GPP Long-Term Evolution (LTE) system or variations or derivatives, 3GPP LTE-Advanced (LTE-A) system or variations or derivatives, Fifth Generation (5G) wireless system or variations or derivatives, 5G mobile networks system or variations or derivatives, 5G New Radio (NR) system or variations or derivatives, or other cellular service standards. Wireless connectivity circuitries (or wireless interface) of the connectivity circuitries 731 refers to wireless connectivity that is not cellular, and can include personal area networks (such as Bluetooth, Near Field, etc.), local area networks (such as Wi-Fi), and/or wide area networks (such as WiMax), and/or other wireless communication. In an example, connectivity circuitries 731 may include a network interface, such as a wired or wireless interface, e.g., so that a system example may be incorporated into a wireless device, for example, cell phone or personal digital assistant.

In some examples, device 700 comprises control hub 732, which represents hardware devices and/or software components related to interaction with one or more I/O devices. For example, processor 704 may communicate with one or more of display 722, one or more peripheral devices 724, storage devices 727, one or more other external devices 729, etc., via control hub 732. Control hub 732 may be a chipset, a Platform Control Hub (PCH), and/or the like.

For example, control hub 732 illustrates one or more connection points for additional devices that connect to device 700, e.g., through which a user might interact with the system. For example, devices (e.g., devices 729) that can be attached to device 700 include microphone devices, speaker or stereo systems, audio devices, video systems or other display devices, keyboard or keypad devices, or other I/O devices for use with specific applications such as card readers or other devices.

As mentioned above, control hub 732 can interact with audio devices, display 722, etc. For example, input through a microphone or other audio device can provide input or commands for one or more applications or functions of device 700. Additionally, audio output can be provided instead of, or in addition to display output. In another example, if display 722 includes a touch screen, display 722 also acts as an input device, which can be at least partially managed by control hub 732. There can also be additional buttons or switches on computing device 700 to provide I/O functions managed by control hub 732. In one example, control hub 732 manages devices such as accelerometers, cameras, light sensors or other environmental sensors, or other hardware that can be included in device 700. The input can be part of direct user interaction, as well as providing environmental input to the system to influence its operations (such as filtering for noise, adjusting displays for brightness detection, applying a flash for a camera, or other features).

In some examples, control hub 732 may couple to various devices using any appropriate communication protocol, e.g., PCIe (Peripheral Component Interconnect Express), USB (Universal Serial Bus), Thunderbolt, High Definition Multimedia Interface (HDMI), Firewire, etc.

In some examples, display 722 represents hardware (e.g., display devices) and software (e.g., drivers) components that provide a visual and/or tactile display for a user to interact with device 700. Display 722 may include a display interface, a display screen, and/or hardware device used to provide a display to a user. In some examples, display 722 includes a touch screen (or touch pad) device that provides both output and input to a user. In an example, display 722 may communicate directly with the processor 704. Display 722 can be one or more of an internal display device, as in a mobile electronic device or a laptop device or an external display device attached via a display interface (e.g., DisplayPort, etc.). In one example display 722 can be a head mounted display (HMD) such as a stereoscopic display device for use in virtual reality (VR) applications or augmented reality (AR) applications.

In some examples and although not illustrated in the figure, in addition to (or instead of) processor 704, device 700 may include Graphics Processing Unit (GPU) comprising one or more graphics processing cores, which may control one or more aspects of displaying contents on display 722.

Control hub 732 (or platform controller hub) may include hardware interfaces and connectors, as well as software components (e.g., drivers, protocol stacks) to make peripheral connections, e.g., to peripheral devices 724.

It will be understood that device 700 could both be a peripheral device to other computing devices, as well as have peripheral devices connected to it. Device 700 may have a "docking" connector to connect to other computing devices for purposes such as managing (e.g., downloading and/or uploading, changing, synchronizing) content on device 700. Additionally, a docking connector can allow device 700 to connect to certain peripherals that allow computing device 700 to control content output, for example, to audiovisual or other systems.

In addition to a proprietary docking connector or other proprietary connection hardware, device 700 can make peripheral connections via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

In some examples, connectivity circuitries 731 may be coupled to control hub 732, e.g., in addition to, or instead of, being coupled directly to the processor 704. In some examples, display 722 may be coupled to control hub 732, e.g., in addition to, or instead of, being coupled directly to processor 704.

In some examples, device 700 comprises memory 730 coupled to processor 704 via memory interface 734. Memory 730 includes memory devices for storing information in device 700. Memory can include nonvolatile (state does not change if power to the memory device is interrupted) and/or volatile (state is indeterminate if power to the memory device is interrupted) memory devices. Memory 730 can be a dynamic random access memory (DRAM) device, a static random access memory (SRAM) device, flash memory device, phase-change memory device, or some other memory device having suitable performance to serve as process memory. In one example, memory 730 can operate as system memory for device 700, to store data and instructions for use when the one or more processors 704 executes an application or process. Memory 730 can store application data, user data, music, photos, documents, or other data, as well as system data (whether long-term or temporary) related to the execution of the applications and functions of device 700.

Elements of various examples and examples are also provided as a machine-readable medium (e.g., memory 730) for storing the computer-executable instructions (e.g., instructions to implement any other processes discussed herein). The machine-readable medium (e.g., memory 730) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, examples of the disclosure may be downloaded as a computer program (e.g., BIOS) which may be transferred from a remote computer (e.g., a server) to a requesting computer (e.g., a client) by way of data signals via a communication link (e.g., a modem or network connection).

In some examples, device 700 comprises temperature measurement circuitries 740, e.g., for measuring temperature of various components of device 700. In an example, temperature measurement circuitries 740 may be embedded, or coupled or attached to various components, whose temperature are to be measured and monitored. For example, temperature measurement circuitries 740 may measure temperature of (or within) one or more of cores 707a, 707b, 707c, voltage regulator 714, memory 730, a mother-board of SOC 701, and/or any appropriate component of device 700.

In some examples, device 700 comprises power measurement circuitries 742, e.g., for measuring power consumed by one or more components of the device 700. In an example, in addition to, or instead of, measuring power, the power measurement circuitries 742 may measure voltage and/or current. In an example, the power measurement circuitries 742 may be embedded, or coupled or attached to various components, whose power, voltage, and/or current consumption are to be measured and monitored. For example, power measurement circuitries 742 may measure power, current and/or voltage supplied by one or more voltage regulators 714, power supplied to SOC 701, power supplied to device 700, power consumed by processor 704 (or any other component) of device 700, etc.

In some examples, device 700 comprises one or more voltage regulator circuitries, generally referred to as voltage regulator (VR) 714. VR 714 generates signals at appropriate voltage levels, which may be supplied to operate any appropriate components of the device 700. Merely as an example, VR 714 is illustrated to be supplying signals to processor 704 of device 700. In some examples, VR 714 receives one or more Voltage Identification (VID) signals, and generates the voltage signal at an appropriate level, based on the VID signals. Various type of VRs may be utilized for the VR 714. For example, VR 714 may include a "buck" VR, "boost" VR, a combination of buck and boost VRs, low dropout (LDO) regulators, switching DC-DC regulators, etc. Buck VR is generally used in power delivery applications in which an input voltage needs to be transformed to an output voltage in a ratio that is smaller than unity. Boost VR is generally used in power delivery applications in which an input voltage needs to be transformed to an output voltage in a ratio that is larger than unity. In some examples, each processor core has its own VR which is controlled by Power Control Unit (PCU) 710a/b and/or Power Management Integrated Circuit (PMIC) 712. In some examples, each core has a network of distributed LDOs to provide efficient control for power management. The LDOs can be digital, analog, or a combination of digital or analog LDOs.

In some examples, device 700 comprises one or more clock generator circuitries, generally referred to as clock generator 716. Clock generator 716 generates clock signals at appropriate frequency levels, which may be supplied to any appropriate components of device 700. Merely as an example, clock generator 716 is illustrated to be supplying clock signals to processor 704 of device 700. In some examples, clock generator 716 receives one or more Frequency Identification (FID) signals, and generates the clock signals at an appropriate frequency, based on the FID signals.

In some examples, device 700 comprises battery 717 supplying power to various components of device 700. Merely as an example, battery 717 is illustrated to be supplying power to processor 704. Although not illustrated in the figures, device 700 may comprise a charging circuitry, e.g., to recharge the battery, based on Alternating Current (AC) power supply received from an AC adapter.

In some examples, device 700 comprises PCU 710 (also referred to as Power Management Unit (PMU), Power Controller, etc.). In an example, some sections of PCU 710 may be implemented by one or more processing cores 707, and these sections of PCU 710 are symbolically illustrated using a dotted box and labelled PCU 710a. In an example, some other sections of PCU 710 may be implemented outside the processing cores 707, and these sections of PCU 710 are symbolically illustrated using a dotted box and labelled as PCU 710b. PCU 710 may implement various power management operations for device 700. PCU 710 may include hardware interfaces, hardware circuitries, connectors, registers, etc., as well as software components (e.g., drivers, protocol stacks), to implement various power management operations for device 700.

In some examples, device 700 comprises PMIC 712, e.g., to implement various power management operations for device 700. In some examples, PMIC 712 is a Reconfigurable Power Management ICs (RPMICs) and/or an IMVP (Intel^{®} Mobile Voltage Positioning). In an example, the PMIC is within an IC chip separate from processor 704. The PMIC 712 may implement various power management operations for device 700. PMIC 712 may include hardware interfaces, hardware circuitries, connectors, registers, etc., as well as software components (e.g., drivers, protocol stacks), to implement various power management operations for device 700.

In an example, device 700 comprises one or both PCU 710 or PMIC 712. In an example, any one of PCU 710 or PMIC 712 may be absent in device 700, and hence, these components are illustrated using dotted lines.

Various power management operations of device 700 may be performed by PCU 710, by PMIC 712, or by a combination of PCU 710 and PMIC 712. For example, PCU 710 and/or PMIC 712 may select a power state (e.g., P-state) for various components of device 700. For example, PCU 710 and/or PMIC 712 may select a power state (e.g., in accordance with the ACPI (Advanced Configuration and Power Interface) specification) for various components of device 700. Merely as an example, PCU 710 and/or PMIC 712 may cause various components of the device 700 to transition to a sleep state, to an active state, to an appropriate C state (e.g., C0 state, or another appropriate C state, in accordance with the ACPI specification), etc. In an example, PCU 710 and/or PMIC 712 may control a voltage output by VR 714 and/or a frequency of a clock signal output by the clock generator, e.g., by outputting the VID signal and/or the FID signal, respectively. In an example, PCU 710 and/or PMIC 712 may control battery power usage, charging of battery 717, and features related to power saving operation. In accordance with some examples, technology for sensor-based control for debug invasiveness may be integrated with one or more of the PCU 710 and/or PMIC 712.

The clock generator 716 can comprise a phase locked loop (PLL), frequency locked loop (FLL), or any suitable clock source. In some examples, each core of processor 704 has its own clock source. As such, each core can operate at a frequency independent of the frequency of operation of the other core. In some examples, PCU 710 and/or PMIC 712 performs adaptive or dynamic frequency scaling or adjustment. For example, clock frequency of a processor core can be increased if the core is not operating at its maximum power consumption threshold or limit. In some examples, PCU 710 and/or PMIC 712 determines the operating condition of each core of a processor, and opportunistically adjusts frequency and/or power supply voltage of that core without the core clocking source (e.g., PLL of that core) losing lock when the PCU 710 and/or PMIC 712 determines that the core is operating below a target performance level. For example, if a core is drawing current from a power supply rail less than a total current allocated for that core or processor 704, then PCU 710 and/or PMIC 712 can temporarily increase the power draw for that core or processor 704 (e.g., by increasing clock frequency and/or power supply voltage level) so that the core or processor 704 can perform at higher performance level. As such, voltage and/or frequency can be increased temporarily for processor 704 without violating product reliability.

In an example, PCU 710 and/or PMIC 712 may perform power management operations, e.g., based at least in part on receiving measurements from power measurement circuitries 742, temperature measurement circuitries 740, charge level of battery 717, and/or any other appropriate information that may be used for power management. To that end, PMIC 712 is communicatively coupled to one or more sensors to sense/detect various values/variations in one or more factors having an effect on power/thermal behavior of the system/platform. Examples of the one or more factors include electrical current, voltage droop, temperature, operating frequency, operating voltage, power consumption, inter-core communication activity, etc. One or more of these sensors may be provided in physical proximity (and/or thermal contact/coupling) with one or more components or logic/IP blocks of a computing system. Additionally, sensor(s) may be directly coupled to PCU 710 and/or PMIC 712 in at least one example to allow PCU 710 and/or PMIC 712 to manage processor core energy at least in part based on value(s) detected by one or more of the sensors.

Also illustrated is an example software stack of device 700 (although not all elements of the software stack are illustrated). Merely as an example, processors 704 may execute application programs 750, OS 752, one or more Power Management (PM) specific application programs (e.g., generically referred to as PM applications 757), and/or the like. PM applications 757 may also be executed by the PCU 710 and/or PMIC 712. OS 752 may also include one or more PM applications 756a, 756b, 756c (e.g., including an OSPM). The OS 752 may also include various drivers 754a, 754b, 754c, etc., some of which may be specific for power management purposes. In some examples, device 700 may further comprise a Basic Input/Output System (BIOS) 720. BIOS 720 may communicate with OS 752 (e.g., via one or more drivers 754), communicate with processors 704, etc.

For example, one or more of PM applications 757, 756, drivers 754, BIOS 720, etc. may be used to implement power management specific tasks, e.g., to control voltage and/or frequency of various components of device 700, to control wake-up state, sleep state, and/or any other appropriate power state of various components of device 700, control battery power usage, charging of the battery 717, features related to power saving operation, etc.

In some examples, multiple tasks are variously performed each with a respective one of application programs 750 and/or OS 752. At a given time during operation of computing device 700, at least some of the tasks each result in, or otherwise correspond to, a respective input being received via one or more human interface devices (HIDs). Said tasks each further include or otherwise correspond to a different respective data flow by which computing device 700 communicates with one or more networks (e.g., via connectivity circuitries 731). User input and/or other characteristics of user behavior are detected with the one or more HIDs, and provide a basis for detecting a relative interest by the user in one task over one or more other co-pending tasks. By way of illustration and not limitation, OS 752 provides a kernel space in which QoS logic, a filter driver, and/or other suitable software logic executes to detect a task which is currently of relatively greater user interest, and to prioritize a data flow which corresponds to said task. An indication of the relative prioritization of tasks (e.g., and the relative prioritization of corresponding data flows) is communicated, for example, from processor 704 to connectivity circuitries 731. Based on such signaling, connectivity circuitries 731 variously processes data packets according to the prioritization of tasks relative to each other.

In accordance with some examples, the SOC 701 further includes a SFB 760 and a TC 765. The SFB 760 and/or the TC 765 includes one or more features or aspects of the various other examples described herein for sensor-based control of debug invasiveness. For example, the SFB 760 may get sensor information from various measurement circuitries/sensors of the SOC 701 (e.g., the temperature measurement circuitries 740, the power measurement circuitries 742, etc.) and provide sensor-based data and/or sensor interrupts to the TC 765.

In some examples, the SFB 760 may monitor one or more sensors, determine a debug condition based on the monitored one or more sensors, and provide an indication of the debug condition. In some examples, the indication may be provided to the TC 765 and/or and a debug system (e.g., a DTS, a debug tool, etc.). For example, SFB 760 may be configured to determine the debug condition based on one or more of voltage, current, and/or power information from the power measurement circuitries 742 and temperature information from the temperature measurement circuitries 740. In some examples, the SFB 760 may be further configured to compare information from the one or more sensors against respective threshold information.

In some examples, the SFB 760 and/or the TC 765 may be further configured to adjust a debug operation based at least in part on the provided indication of the debug condition. For example, the SFB 760 and/or the TC 765 may be configured to reduce a debug operation invasiveness if the indication of the debug condition corresponds to an abnormal operation condition. In some examples, the SFB 760 and/or the TC 765 may be further configured to adjust an output bandwidth of trace debug data based at least in part on the provided indication of the debug condition, to adjust a number of null packets inserted into a trace export stream based at least in part on the provided indication of the debug condition, to adjust a trace export clock based at least in part on the provided indication of the debug condition, and/or to adjust a trace verbosity level (e.g., or severity level) based at least in part on the provided indication of the debug condition. In some examples, the SFB 760 and/or the TC 765 may provide information to a DTS and the DTS may be configured to make the noted adjustments to reduce the debug invasiveness.

The SFB 760 and/or the TC 765 may be implemented as separate circuit blocks. Alternatively, all or portions of the SFB 760 and/or TC 765 may be implemented in one or more other circuit blocks of the SOC 701 (e.g., or outside the SOC 701), including the control hub 732, the PMIC 712 and/or a PCU (e.g., such as PCU 710a inside the core 707a, or such as the PCU 710b outside the processor 704).

Those skilled in the art will appreciate that a wide variety of devices may benefit from the foregoing examples. The following exemplary core architectures, processors, and computer architectures are non-limiting examples of devices that may beneficially incorporate examples of the technology described herein.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable. Some examples may be particularly beneficial for parallel computing applications, a GPU (e.g., as part of a discrete graphics card), a SIMD processor, an AI processor, ML applications, and neural network processing applications.

FIG. 10 illustrates an example computing system. Multiprocessor system 800 is an interfaced system and includes a plurality of processors or cores including a first processor 870 and a second processor 880 coupled via an interface 850 such as a point-to-point (P-P) interconnect, a fabric, and/or bus. In some examples, the first processor 870 and the second processor 880 are homogeneous. In some examples, first processor 870 and the second processor 880 are heterogenous. Though the example system 800 is shown to have two processors, the system may have three or more processors, or may be a single processor system. In some examples, the computing system is a system on a chip (SOC).

Processors 870 and 880 are shown including integrated memory controller (IMC) circuitry 872 and 882, respectively. Processor 870 also includes interface circuits 876 and 878; similarly, second processor 880 includes interface circuits 886 and 888. Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a coprocessor 838 via an interface circuit 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect or another I/O interconnect. In some examples, first interface 816 is coupled to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interface 816, along with a bus bridge 818 which couples first interface 816 to a second interface 820. In some examples, one or more additional processor(s) 815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SOC) that may be included on the same die as the described CPU (sometimes referred to as the application core(s) or application processor(s)), the above described coprocessor, and additional functionality. Example core architectures are described next, followed by descriptions of example processors and computer architectures.

FIG. 11 illustrates a block diagram of an example processor and/or SOC 900 that may have one or more cores and an integrated memory controller. The solid lined boxes illustrate a processor 900 with a single core 902(A), system agent unit circuitry 910, and a set of one or more interface controller unit(s) circuitry 916, while the optional addition of the dashed lined boxes illustrates an alternative processor 900 with multiple cores 902(A)-(N), a set of one or more integrated memory controller unit(s) circuitry 914 in the system agent unit circuitry 910, and special purpose logic 908, as well as a set of one or more interface controller units circuitry 916. Note that the processor 900 may be one of the processors 870 or 880, or co-processor 838 or 815 of FIG. 10.

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface controller units circuitry 916 couple the cores 902 to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

### Example Core Architectures - In-order and out-of-order core block diagram.

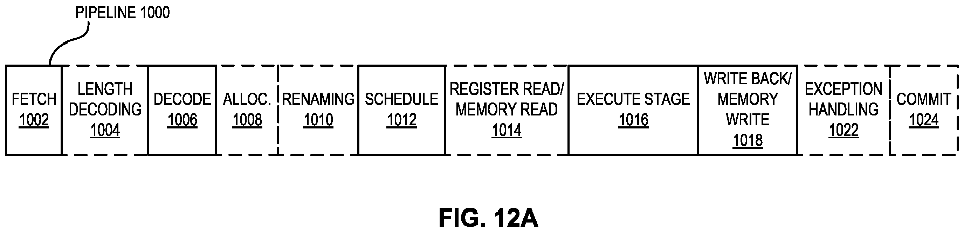

FIG. 12A is a block diagram illustrating both an example in-order pipeline and an example register renaming, out-of-order issue/execution pipeline according to examples. FIG. 12B is a block diagram illustrating both an example in-order architecture core and an example register renaming, out-of-order issue/execution architecture core to be included in a processor according to examples. The solid lined boxes in FIGS. 12A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 12A, a processor pipeline 1000 includes a fetch stage 1002, an optional length decoding stage 1004, a decode stage 1006, an optional allocation (Alloc) stage 1008, an optional renaming stage 1010, a schedule (also known as a dispatch or issue) stage 1012, an optional register read/memory read stage 1014, an execute stage 1016, a write back/memory write stage 1018, an optional exception handling stage 1022, and an optional commit stage 1024. One or more operations can be performed in each of these processor pipeline stages. For example, during the fetch stage 1002, one or more instructions are fetched from instruction memory, and during the decode stage 1006, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1006 and the register read/memory read stage 1014 may be combined into one pipeline stage. In one example, during the execute stage 1016, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 12B may implement the pipeline 1000 as follows: 1) the instruction fetch circuitry 1038 performs the fetch and length decoding stages 1002 and 1004; 2) the decode circuitry 1040 performs the decode stage 1006; 3) the rename/allocator unit circuitry 1052 performs the allocation stage 1008 and renaming stage 1010; 4) the scheduler(s) circuitry 1056 performs the schedule stage 1012; 5) the physical register file(s) circuitry 1058 and the memory unit circuitry 1070 perform the register read/memory read stage 1014; the execution cluster(s) 1060 perform the execute stage 1016; 6) the memory unit circuitry 1070 and the physical register file(s) circuitry 1058 perform the write back/memory write stage 1018; 7) various circuitry may be involved in the exception handling stage 1022; and 8) the retirement unit circuitry 1054 and the physical register file(s) circuitry 1058 perform the commit stage 1024.

FIG. 12B shows a processor core 1090 including front-end unit circuitry 1030 coupled to execution engine unit circuitry 1050, and both are coupled to memory unit circuitry 1070. The core 1090 may be a reduced instruction set architecture computing (RISC) core, a complex instruction set architecture computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front-end unit circuitry 1030 may include branch prediction circuitry 1032 coupled to instruction cache circuitry 1034, which is coupled to an instruction translation lookaside buffer (TLB) 1036, which is coupled to instruction fetch circuitry 1038, which is coupled to decode circuitry 1040. In one example, the instruction cache circuitry 1034 is included in the memory unit circuitry 1070 rather than the front-end circuitry 1030. The decode circuitry 1040 (or decoder) may decode instructions, and generate as an output one or more micro-operations, microcode entry points, microinstructions, other instructions, or other control signals, which are decoded from, or which otherwise reflect, or are derived from, the original instructions. The decode circuitry 1040 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1040 may be implemented using various different mechanisms. Examples of suitable mechanisms include, but are not limited to, look-up tables, hardware implementations, programmable logic arrays (PLAs), microcode read only memories (ROMs), etc. In one example, the core 1090 includes a microcode ROM (not shown) or other medium that stores microcode for certain macroinstructions (e.g., in decode circuitry 1040 or otherwise within the front-end circuitry 1030). In one example, the decode circuitry 1040 includes a micro-operation (micro-op) or operation cache (not shown) to hold/cache decoded operations, micro-tags, or micro-operations generated during the decode or other stages of the processor pipeline 1000. The decode circuitry 1040 may be coupled to rename/allocator unit circuitry 1052 in the execution engine circuitry 1050.

The execution engine circuitry 1050 includes the rename/allocator unit circuitry 1052 coupled to retirement unit circuitry 1054 and a set of one or more scheduler(s) circuitry 1056. The scheduler(s) circuitry 1056 represents any number of different schedulers, including reservations stations, central instruction window, etc. In some examples, the scheduler(s) circuitry 1056 can include arithmetic logic unit (ALU) scheduler/scheduling circuitry, ALU queues, address generation unit (AGU) scheduler/scheduling circuitry, AGU queues, etc. The scheduler(s) circuitry 1056 is coupled to the physical register file(s) circuitry 1058. Each of the physical register file(s) circuitry 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1058 includes vector registers unit circuitry, writemask registers unit circuitry, and scalar register unit circuitry. These register units may provide architectural vector registers, vector mask registers, general-purpose registers, etc. The physical register file(s) circuitry 1058 is coupled to the retirement unit circuitry 1054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1054 and the physical register file(s) circuitry 1058 are coupled to the execution cluster(s) 1060. The execution cluster(s) 1060 includes a set of one or more execution unit(s) circuitry 1062 and a set of one or more memory access circuitry 1064. The execution unit(s) circuitry 1062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1056, physical register file(s) circuitry 1058, and execution cluster(s) 1060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1064). It should also be understood that where separate pipelines are used, one or more of these pipelines may be out-of-order issue/execution and the rest in-order.

In some examples, the execution engine unit circuitry 1050 may perform load store unit (LSU) address/data pipelining to an Advanced Microcontroller Bus (AMB) interface (not shown), and address phase and writeback, data phase load, store, and branches.

The set of memory access circuitry 1064 is coupled to the memory unit circuitry 1070, which includes data TLB circuitry 1072 coupled to data cache circuitry 1074 coupled to level 2 (L2) cache circuitry 1076. In one example, the memory access circuitry 1064 may include load unit circuitry, store address unit circuitry, and store data unit circuitry, each of which is coupled to the data TLB circuitry 1072 in the memory unit circuitry 1070. The instruction cache circuitry 1034 is further coupled to the level 2 (L2) cache circuitry 1076 in the memory unit circuitry 1070. In one example, the instruction cache 1034 and the data cache 1074 are combined into a single instruction and data cache (not shown) in L2 cache circuitry 1076, level 3 (L3) cache circuitry (not shown), and/or main memory. The L2 cache circuitry 1076 is coupled to one or more other levels of cache and eventually to a main memory.

The core 1090 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1090 includes logic to support a packed data instruction set architecture extension (e.g., AVX1, AVX2), thereby allowing the operations used by many multimedia applications to be performed using packed data.

### Example Execution Unit(s) Circuitry.

FIG. 13 illustrates examples of execution unit(s) circuitry, such as execution unit(s) circuitry 1062 of FIG. 12B. As illustrated, execution unit(s) circuity 1062 may include one or more ALU circuits 1101, optional vector/single instruction multiple data (SIMD) circuits 1103, load/store circuits 1105, branch/jump circuits 1107, and/or Floating-point unit (FPU) circuits 1109. ALU circuits 1101 perform integer arithmetic and/or Boolean operations. Vector/SnVID circuits 1103 perform vector/SIMD operations on packed data (such as SIMD/vector registers). Load/store circuits 1105 execute load and store instructions to load data from memory into registers or store from registers to memory. Load/store circuits 1105 may also generate addresses. Branch/jump circuits 1107 cause a branch or jump to a memory address depending on the instruction. FPU circuits 1109 perform floating-point arithmetic. The width of the execution unit(s) circuitry 1062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

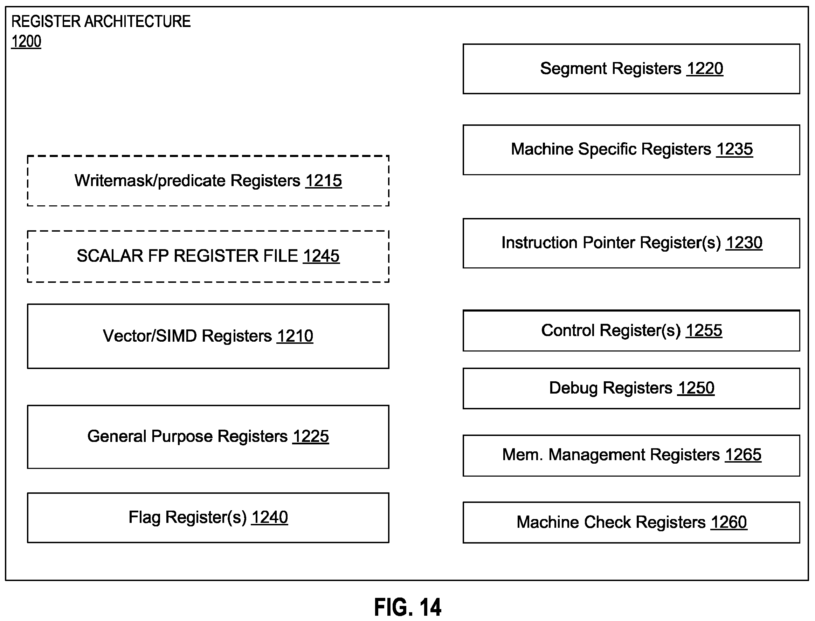

FIG. 14 is a block diagram of a register architecture 1200 according to some examples. As illustrated, the register architecture 1200 includes vector/SIMD registers 1210 that vary from 128-bit to 1,024 bits width. In some examples, the vector/SIMD registers 1210 are physically 512-bits and, depending upon the mapping, only some of the lower bits are used. For example, in some examples, the vector/SIMD registers 1210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1200 includes writemask/predicate registers 1215. For example, in some examples, there are 8 writemask/predicate registers (sometimes called k0 through k7) that are each 16-bit, 32-bit, 64-bit, or 128-bit in size. Writemask/predicate registers 1215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1215 corresponds to a data element position of the destination. In other examples, the writemask/predicate registers 1215 are scalable and consists of a set number of enable bits for a given vector element (e.g., 8 enable bits per 64-bit vector element).

The register architecture 1200 includes a plurality of general-purpose registers 1225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1200 includes scalar floating-point (FP) register file 1245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1240 (e.g., EFLAGS, RFLAGS, etc.) store status and control information for arithmetic, compare, and system operations. For example, the one or more flag registers 1240 may store condition code information such as carry, parity, auxiliary carry, zero, sign, and overflow. In some examples, the one or more flag registers 1240 are called program status and control registers.

Segment registers 1220 contain segment points for use in accessing memory. In some examples, these registers are referenced by the names CS, DS, SS, ES, FS, and GS.

Machine specific registers (MSRs) 1235 control and report on processor performance. Most MSRs 1235 handle system-related functions and are not accessible to an application program. Machine check registers 1260 consist of control, status, and error reporting MSRs that are used to detect and report on hardware errors.

One or more instruction pointer register(s) 1230 store an instruction pointer value. Control register(s) 1255 (e.g., CR0-CR4) determine the operating mode of a processor (e.g., processor 870, 880, 838, 815, and/or 900) and the characteristics of a currently executing task. Debug registers 1250 control and allow for the monitoring of a processor or core's debugging operations.

Memory (mem) management registers 1265 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1200 may, for example, be used in register file / memory, or physical register file(s) circuitry 10 58.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 15 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 15 shows a program in a high-level language 1302 may be compiled using a first ISA compiler 1304 to generate first ISA binary code 1306 that may be natively executed by a processor with at least one first ISA core 1316. The processor with at least one first ISA core 1316 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1304 represents a compiler that is operable to generate first ISA binary code 1306 (e.g., object code) that can, with or without additional linkage processing, be executed on the processor with at least one first ISA core 1316. Similarly, FIG. 15 shows the program in the high-level language 1302 may be compiled using an alternative ISA compiler 1308 to generate alternative ISA binary code 1310 that may be natively executed by a processor without a first ISA core 1314. The instruction converter 1312 is used to convert the first ISA binary code 1306 into code that may be natively executed by the processor without a first ISA core 1314. This converted code is not necessarily to be the same as the alternative ISA binary code 1310; however, the converted code will accomplish the general operation and be made up of instructions from the alternative ISA. Thus, the instruction converter 1312 represents software, firmware, hardware, or a combination thereof that, through emulation, simulation or any other process, allows a processor or other electronic device that does not have a first ISA processor or core to execute the first ISA binary code 1306.

Techniques and architectures for sensor-based control for debug invasiveness are described herein. In the above description, for purposes of explanation, numerous specific details are set forth in order to provide a thorough understanding of certain examples. It will be apparent, however, to one skilled in the art that certain examples can be practiced without these specific details. In other instances, structures and devices are shown in block diagram form in order to avoid obscuring the description

### Additional Notes and Examples

Example 1 includes an apparatus, comprising circuitry to monitor one or more sensors, determine a debug condition based on the monitored one or more sensors, and provide an indication of the debug condition.

Example 2 includes the apparatus of Example 1, wherein the one or more sensors are to provide one or more of voltage information and temperature information, and wherein the circuitry is further to determine the debug condition based on one or more of the voltage information and temperature information.

Example 3 includes the apparatus of any of Examples 1 to 2, wherein the circuitry is further to compare information from the one or more sensors against respective threshold information.

Example 4 includes the apparatus of any of Examples 1 to 3, wherein the circuitry is further to adjust a debug operation based at least in part on the provided indication of the debug condition.

Example 5 includes the apparatus of Example 4, wherein the circuitry is further to reduce a debug operation invasiveness if the indication of the debug condition corresponds to an abnormal operation condition.

Example 6 includes the apparatus of any of Examples 4 to 5, wherein the circuitry is further to adjust an output bandwidth of trace debug data based at least in part on the provided indication of the debug condition.

Example 7 includes the apparatus of any of Examples 4 to 6, wherein the circuitry is further to adjust a number of null packets inserted into a trace export stream based at least in part on the provided indication of the debug condition.

Example 8 includes the apparatus of any of Examples 4 to 7, wherein the circuitry is further to adjust a trace export clock based at least in part on the provided indication of the debug condition.

Example 9 includes the apparatus of any of Examples 4 to 8, wherein the circuitry is further to adjust a trace verbosity level based at least in part on the provided indication of the debug condition.

Example 10 includes an apparatus, comprising memory to store debug risk threshold information, and sensor fusion circuitry coupled to the memory to compare sensor information against the stored debug risk threshold information, and provide an indication of the comparison.

Example 11 includes the apparatus of Example 10, wherein the sensor fusion circuitry is further to provide the indication of the comparison to one or more of a trace controller and a debug system.

Example 12 includes the apparatus of any of Examples 10 to 11, wherein the sensor fusion circuitry is further to trigger an interrupt if the comparison indicates an abnormal operation condition.

Example 13 includes the apparatus of any of Examples 10 to 12, wherein the sensor information includes one or more of voltage information and temperature information, and wherein the sensor fusion circuitry is further to provide the indication based on a comparison of one or more of the voltage information against a stored debug voltage risk threshold and the temperature information against a stored debug temperature risk threshold.

Example 14 includes the apparatus of any of Examples 10 to 13, further comprising debug circuitry coupled to the sensor fusion circuitry to adjust a debug operation based at least in part on the provided indication of the comparison.

Example 15 includes the apparatus of Example 14, wherein the debug circuitry is further to reduce a debug operation invasiveness if the indication of the comparison corresponds to an abnormal operation condition.

Example 16 includes the apparatus of any of Examples 14 to 15, wherein the debug circuitry is further to adjust an output bandwidth of trace debug data based at least in part on the provided indication of the comparison.

Example 17 includes the apparatus of any of Examples 14 to 16, wherein the debug circuitry is further to adjust a number of null packets inserted into a trace export stream based at least in part on the provided indication of the comparison.

Example 18 includes the apparatus of any of Examples 14 to 17, wherein the debug circuitry is further to adjust a trace export clock based at least in part on the provided indication of the comparison.

Example 19 includes the apparatus of any of Examples 14 to 18, wherein the debug circuitry is further to adjust a trace verbosity level based at least in part on the provided indication of the comparison.

Example 20 includes an apparatus, comprising a processor, a trace controller coupled to the processor to aggregate trace debug data, and a sensor fusion block coupled to the processor to collect operation parameters, the sensor fusion block comprising circuitry to store debug risk threshold information, compare collected operation parameters against the stored debug risk threshold information, and provide an indication of the comparison (e.g., and wherein the trace controller is further to adjust an amount of debug invasiveness based on the provided indication of the comparison).

Example 21 includes the apparatus of Example 20, wherein the circuitry is further to provide the indication of the comparison to one or more of the trace controller and a debug system.

Example 22 includes the apparatus of any of Examples 20 to 21, wherein the circuitry is further to trigger an interrupt if the comparison indicates an abnormal operation condition.

Example 23 includes the apparatus of any of Examples 20 to 22, wherein the collected operation parameters include one or more of voltage information and temperature information, and wherein the circuitry is further to provide the indication based on a comparison of one or more of the voltage information against a stored debug voltage risk threshold and the temperature information against a stored debug temperature risk threshold.

Example 24 includes the apparatus of any of Examples 20 to 23, wherein the trace controller is further to adjust a debug operation based at least in part on the provided indication of the comparison.

Example 25 includes the apparatus of Example 24, wherein the trace controller is further to reduce a debug operation invasiveness if the indication of the comparison corresponds to an abnormal operation condition.

Example 26 includes the apparatus of any of Examples 24 to 25, wherein the trace controller is further to adjust an output bandwidth of trace debug data based at least in part on the provided indication of the comparison.

Example 27 includes the apparatus of any of Examples 24 to 26, wherein the trace controller is further to adjust a number of null packets inserted into a trace export stream based at least in part on the provided indication of the comparison.

Example 28 includes the apparatus of any of Examples 24 to 27, wherein the trace controller is further to adjust a trace export clock based at least in part on the provided indication of the comparison.

Example 29 includes the apparatus of any of Examples 24 to 28, wherein the trace controller is further to adjust a trace verbosity level based at least in part on the provided indication of the comparison.

Example 30 includes the apparatus of any of Examples 20 to 29, wherein the processor, the trace controller, and the sensor fusion block are integrated on a system-on-a-chip. 31 includes a method, comprising monitoring one or more sensors, determining a debug condition based on the monitored one or more sensors, and providing an indication of the debug condition.

Example 32 includes the method of Example 31, further comprising determining one or more of voltage information and temperature information from the monitored one or more sensors, and determining the debug condition based on one or more of the voltage information and temperature information.

Example 33 includes the method of any of Examples 31 to 32, further comprising triggering an interrupt if the debug condition corresponds to an abnormal operation condition.

Example 34 includes the method of any of Examples 31 to 33, further comprising providing the indication of the debug condition to a debug system.

Example 35 includes the method of any of Examples 31 to 34, further comprising adjusting a debug operation based at least in part on the provided indication of the debug condition.

Example 36 includes the method of Example 35, further comprising reducing a debug operation invasiveness if the indication of the debug condition corresponds to an abnormal operation condition.

Example 37 includes the method of any of Examples 35 to 36, further comprising adjusting an output bandwidth of trace debug data based at least in part on the provided indication of the debug condition.

Example 38 includes the method of any of Examples 35 to 37, further comprising adjusting a number of null packets inserted into a trace export stream based at least in part on the provided indication of the debug condition.

Example 39 includes the method of any of Examples 35 to 38, further comprising adjusting a trace export clock based at least in part on the provided indication of the debug condition.

Example 40 includes the method of any of Examples 35 to 39, further comprising adjusting a trace verbosity level based at least in part on the provided indication of the debug condition.

Example 41 includes an apparatus, comprising means for monitoring one or more sensors, means for determining a debug condition based on the monitored one or more sensors, and means for providing an indication of the debug condition.

Example 42 includes the apparatus of Example 41, further comprising means for determining one or more of voltage information and temperature information from the monitored one or more sensors, and means for determining the debug condition based on one or more of the voltage information and temperature information.

Example 43 includes the apparatus of any of Examples 41 to 42, further comprising means for triggering an interrupt if the debug condition corresponds to an abnormal operation condition.

Example 44 includes the apparatus of any of Examples 41 to 43, further comprising means for providing the indication of the debug condition to a debug system.

Example 45 includes the apparatus of any of Examples 41 to 44, further comprising means for adjusting a debug operation based at least in part on the provided indication of the debug condition.

Example 46 includes the apparatus of Example 45, further comprising means for reducing a debug operation invasiveness if the indication of the debug condition corresponds to an abnormal operation condition.

Example 47 includes the apparatus of any of Examples 45 to 46, further comprising means for adjusting an output bandwidth of trace debug data based at least in part on the provided indication of the debug condition.

Example 48 includes the apparatus of any of Examples 45 to 47, further comprising means for adjusting a number of null packets inserted into a trace export stream based at least in part on the provided indication of the debug condition.

Example 49 includes the apparatus of any of Examples 45 to 48, further comprising means for adjusting a trace export clock based at least in part on the provided indication of the debug condition.

Example 50 includes the apparatus of any of Examples 45 to 49, further comprising means for adjusting a trace verbosity level based at least in part on the provided indication of the debug condition.

Example 51 includes at least one non-transitory one machine readable medium comprising a plurality of instructions that, in response to being executed on a computing device, cause the computing device to monitor one or more sensors, determine a debug condition based on the monitored one or more sensors, and provide an indication of the debug condition.

Example 52 includes the at least one non-transitory one machine readable medium of Example 51, comprising a plurality of further instructions that, in response to being executed on the computing device, cause the computing device to determine one or more of voltage information and temperature information from the monitored one or more sensors, and determine the debug condition based on one or more of the voltage information and temperature information.

Example 53 includes the at least one non-transitory one machine readable medium of any of Examples 51 to 52, comprising a plurality of further instructions that, in response to being executed on the computing device, cause the computing device to trigger an interrupt if the debug condition corresponds to an abnormal operation condition.

Example 54 includes the at least one non-transitory one machine readable medium of any of Examples 51 to 53, comprising a plurality of further instructions that, in response to being executed on the computing device, cause the computing device to provide the indication of the debug condition to a debug system.

Example 55 includes the at least one non-transitory one machine readable medium of any of Examples 51 to 54, comprising a plurality of further instructions that, in response to being executed on the computing device, cause the computing device to adjust a debug operation based at least in part on the provided indication of the debug condition.

Example 56 includes the at least one non-transitory one machine readable medium of Example 55, comprising a plurality of further instructions that, in response to being executed on the computing device, cause the computing device to reduce a debug operation invasiveness if the indication of the debug condition corresponds to an abnormal operation condition.

Example 57 includes the at least one non-transitory one machine readable medium of any of Examples 55 to 56, comprising a plurality of further instructions that, in response to being executed on the computing device, cause the computing device to adjust an output bandwidth of trace debug data based at least in part on the provided indication of the debug condition.

Example 58 includes the at least one non-transitory one machine readable medium of any of Examples 55 to 57, comprising a plurality of further instructions that, in response to being executed on the computing device, cause the computing device to adjust a number of null packets inserted into a trace export stream based at least in part on the provided indication of the debug condition.

Example 59 includes the at least one non-transitory one machine readable medium of any of Examples 55 to 58, comprising a plurality of further instructions that, in response to being executed on the computing device, cause the computing device to adjust a trace export clock based at least in part on the provided indication of the debug condition.

Example 60 includes the at least one non-transitory one machine readable medium of any of Examples 55 to 59, comprising a plurality of further instructions that, in response to being executed on the computing device, cause the computing device to adjust a trace verbosity level based at least in part on the provided indication of the debug condition.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain examples also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain examples are not described with reference to any particular programming language. It will be appreciated that a variety of programming languages may be used to implement the teachings of such examples as described herein.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus, comprising:
a processor;
a trace controller coupled to the processor to aggregate trace debug data; and
a sensor fusion block coupled to the processor to collect operation parameters, the sensor fusion block comprising circuitry to:
store debug risk threshold information,
compare collected operation parameters against the stored debug risk threshold information, and
provide an indication of the comparison.

2. The apparatus of claim 1, wherein the circuitry is further to:
provide the indication of the comparison to one or more of the trace controller and a debug system.

3. The apparatus of any of claim 1 to claim 2, wherein the circuitry is further to:
trigger an interrupt if the comparison indicates an abnormal operation condition.

4. The apparatus of any of claim 1 to claim 3, wherein the collected operation parameters include one or more of voltage information and temperature information, and wherein the circuitry is further to:
provide the indication based on a comparison of one or more of the voltage information against a stored debug voltage risk threshold and the temperature information against a stored debug temperature risk threshold.

5. The apparatus of any of claim 1 to claim 4, wherein the trace controller is further to:
adjust a debug operation based at least in part on the provided indication of the comparison.

6. The apparatus of claim 5, wherein the trace controller is further to:
reduce a debug operation invasiveness if the indication of the comparison corresponds to an abnormal operation condition.

7. The apparatus of any of claim 5 to claim 6, wherein the trace controller is further to:
adjust an output bandwidth of trace debug data based at least in part on the provided indication of the comparison.

8. The apparatus of any of claim 5 to claim 7, wherein the trace controller is further to:
adjust a number of null packets inserted into a trace export stream based at least in part on the provided indication of the comparison.

9. The apparatus of any of claim 5 to claim 8, wherein the trace controller is further to:
adjust a trace export clock based at least in part on the provided indication of the comparison.

10. The apparatus of any of claim 5 to claim 9, wherein the trace controller is further to:
adjust a trace verbosity level based at least in part on the provided indication of the comparison.

11. The apparatus of any of claim 1 to claim 10, wherein the processor, the trace controller, and the sensor fusion block are integrated on a system-on-a-chip.

12. A method, comprising:
monitoring one or more sensors;
determining a debug condition based on the monitored one or more sensors; and
providing an indication of the debug condition.

13. The method of claim 12, further comprising:
determining one or more of voltage information and temperature information from the monitored one or more sensors; and
determining the debug condition based on one or more of the voltage information and temperature information.

14. The method of any of claim 12 to claim 13, further comprising:
triggering an interrupt if the debug condition corresponds to an abnormal operation condition.

15. Machine-readable storage including machine-readable instructions, when executed, to implement a method or realize an apparatus as claimed in any preceding claim.
